(19) Europäisches Patentamt / European Patent Office / Office européen des brevets

(11) **EP 4 365 560 B1**

(12) **EUROPEAN PATENT SPECIFICATION**

(45) Date of publication and mention
of the grant of the patent:
**15.07.2026 Bulletin 2026/29**

(21) Application number: **22952141.4**

(22) Date of filing: **15.12.2022**

(51) International Patent Classification (IPC):
*E01B 19/00* (2006.01)   *E01B 35/00* (2006.01)
*G01H 13/00* (2006.01)   *G01M 7/02* (2006.01)
*F16F 15/00* (2006.01)

(52) Cooperative Patent Classification (CPC):
**G01H 13/00; E01B 19/003; E01B 35/00;**
**F16F 7/108; G01M 7/025; G01M 7/027;** Y02T 90/00

(86) International application number:
**PCT/CN2022/139193**

(87) International publication number:
**WO 2024/021444 (01.02.2024 Gazette 2024/05)**

(54) **BALLAST BED RESONATOR CONFIGURATION METHOD**

VERFAHREN ZUR KONFIGURATION EINES VORSCHALTGERÄT-RESONATORS

PROCÉDÉ DE CONFIGURATION DE RÉSONATEUR À LIT DE BALLAST

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.07.2022 CN 202210871589**

(43) Date of publication of application:
**08.05.2024 Bulletin 2024/19**

(73) Proprietor: **Zhejiang Tiantie Industry Co., Ltd.**
**Taizhou, Zhejiang 317200 (CN)**

(72) Inventors:
• **LI, Shaohui**
  **Zhejiang 317200 (CN)**
• **WANG, Bo**
  **Zhejiang 317200 (CN)**
• **LIN, Jianxun**
  **Zhejiang 317200 (CN)**
• **MENG, Fandong**
  **Zhejiang 317200 (CN)**
• **SONG, Tingting**
  **Zhejiang 317200 (CN)**

(74) Representative: **Taor, Simon Edward William et al**
**Venner Shipley LLP**
**TIDE Bankside**
**8 Emerson Street**
**London SE1 9DU (GB)**

(56) References cited:
CN-A- 106 894 299     CN-A- 106 965 833
CN-A- 109 594 669     CN-A- 111 664 209
JP-A- 2001 215 167

EP 4 365 560 B1

**Description**

**Field of the Invention**

The present invention relates to the field of rail vibration reduction, and specifically relates to a track bed resonator arranging method.

**Background of the Invention**

In the past decade, China's urban rail transit has developed rapidly. With the continuous increase of rail lines, the problem of vibration and noise disturbance to the public has also been increasingly valued. The typical vibration frequency induced by trains is generally between 10Hz and 80Hz, and the peak is concentrated in the range of 50Hz to 60Hz. These typical frequency bands may cause resonance in nearby buildings, affecting the normal operation of some facilities and equipment, and causing inconvenience to people's daily lives.

The mass spring system in the form of steel spring floating slab track bed is a common measure for vibration reduction and noise reduction in rail transit, usually able to provide the natural frequency of the system from 4Hz to 10Hz. However, due to factors such as line conditions and building structures, the natural frequencies of vibration reduction systems suitable for different line sections may vary. If a standardized vibration reduction and noise reduction structure is used, it is difficult to achieve the desired vibration reduction effect.

For example, CN111664209A discloses a vibration reduction method, which includes placing a plurality of absorbers along a direction on a floating plate of a track, and adjusting the parameters of the absorbers to cover the resonance frequency range of the floating plate in the low-frequecy range, thereby suppressing the vibration of the track. However, this method adopts a standardized vibration reduction structure, so it also has the above-mentioned problems.

In addition, for the lines that have already been put into operation, if the relevant organizations enhance the track vibration reduction capacity, it will require higher renovation costs and will also affect the normal operation of the existing lines, exacerbating economic losses.

Therefore, it is an urgent issue to take further vibration reduction measures for road sections where nearby buildings are greatly affected by train vibrations.

**Summary of the Invention**

The present invention is carried out to solve the aforementioned problems, and aims to provide a track bed resonator arranging method.

The present invention provides a track bed resonator arranging method, characterized by comprising: step S1, conduct vibration test on said track line and inside a building on a sensitive point near said track line that is greatly affected by the vibration caused by train passing as the train passes through, to obtain vibration data; step S2, calculate and determine the arranging range of said track bed resonator based on said vibration data measured in step S1; step S3, perform frequency domain analysis on said vibration data of said sensitive point to determine the indoor vibration resonance natural frequency of the building at said sensitive points affected by train passing through; step S4, design said track bed resonator based on said indoor vibration resonance natural frequency, so that the natural frequency of said track bed is equal to said indoor vibration resonance natural frequency; step S5, arrange said track bed resonators on said track bed along the extension direction of said track line and within said arranging range.

The track bed resonator arranging method provided by the present invention can also have the following technical features, wherein step S1 comprises: step S1-1, arrange a first test point and a second test point successively on said track line along the passing direction of said train, and arrange a third test point inside the building at said sensitive point; step S1-2, measure the vibration response time of said first test point, said second test point and said third test point by using vibration testing sensors, to obtain the corresponding vibration data.

The track bed resonator arranging method provided by the present invention can also have the following technical features, wherein the distance between said first test point and said second test point is greater than or equal to the length of said train.

The track bed resonator arranging method provided by the present invention can also have the following technical features, wherein step S2 comprises: step 2-1, according to said vibration data measured in step S1-2, the arranging starting point of said track bed resonator is calculated as:

$$\mathrm{TMD}_{ips1} = mp_a + \frac{(mp_b - mp_a) \times (t_{ch1} - t_{ah1})}{t_{bh1} - t_{ah1}}$$

wherein $mp_a$ is the mileage of said first test point relative to a nearby station on said track line; $mp_b$ is the mileage of said second test point relative to a nearby station on said track line; $t_{ah1}$ is the vibration response time of the head of said train at said first test point; $t_{bh1}$ is the vibration response time of the head of said train at said second test point; $t_{ch1}$ is the vibration response time of the head of said train at said third test point; step S2-2, according to said vibration data measured in step S1-2, the arranging end point of said track bed resonator is calculated as:

$$\mathrm{TMD}_{ipe1} = mp_a + \frac{(mp_b - mp_a) \times (t_{ct1} - t_{ah1})}{t_{bh1} - t_{ah1}}$$

wherein $t_{ct1}$ is the vibration response time of the tail of said train at said third test point.

The track bed resonator arranging method provided by the present invention can also have the following technical features, wherein the step S2 further comprises: step S2-3, repeat step S1-2 to step S2-2 for two more times, said arranging starting point and said arranging end point calculated for the second time are $\mathrm{TMD}_{ips2}$ and $\mathrm{TMD}_{ipe2}$, respectively, and said arranging starting point and said arranging end point calculated for the third time are $\mathrm{TMD}_{ips3}$ and $\mathrm{TMD}_{ipe3}$, respectively; step S2-4, according to the calculation results from step S2-1 to step S2-3, determine that the arranging starting point of said track bed resonator is $\min\{\mathrm{TMD}_{ips1}, \mathrm{TMD}_{ips2}, \mathrm{TMD}_{ips3}\}$, and the arranging end point thereof is $\max\{\mathrm{TMD}_{ipe1}, \mathrm{TMD}_{ipe2}, \mathrm{TMD}_{ipe3}\}$.

The track bed resonator arranging method provided by the present invention can also have the following technical features, wherein the arranging range of said track bed resonator is greater than or equal to the length of said train.

The track bed resonator arranging method provided by the present invention can also have the following technical features, wherein the step S4 comprises: step S4-1, according to said indoor vibration resonance natural frequency, the total stiffness of said track bed resonator per linear meter is:

$$k = (2\pi \times f_{TMD})^2 \times m = (2\pi \times f_{in})^2 \times m$$

wherein m is the total mass per linear meter of said resonant plate; $f_{TMD}$ is the natural frequency of said track bed resonator; $f_{in}$ is said indoor vibration resonance natural frequency; step S4-2, set the width of a single said vibration damping pad layer according to the width of said resonant plate as:

$$\mathrm{USM}_W = \frac{2W}{n}$$

wherein $W$ is the width of a single said resonant plate; n is the number of said vibration damping pad layers; step S4-3, according to the total stiffness of said track bed resonator and the width of said vibration damping pad layers, calculate the length of a single said vibration damping pad layer when using said vibration damping pad layers with different static moduli as:

$$\mathrm{USM}_L = \frac{k \times L}{\mathrm{USM}_W \times n \times S}$$

wherein $S$ is the static moduli of a single said vibration damping pad layer; L is the length of a single resonant plate; step S4-4, determine whether the total length of said vibration damping pad layer exceeds the length of said resonant plate, i.e., whether $2\mathrm{USM}_L \leq L$ is valid, if determined yes, select the static moduli, length and width corresponding to said vibration damping pad layer at this time; if determined no, continue to replace said vibration damping pad layers with vibration damping pad layers with a different static moduli and calculate the corresponding length $\mathrm{USM}_L$, until the total length of said vibration damping pad layers does not exceed the length of said resonant plate.

The track bed resonator arranging method provided by the present invention can also have the following technical features, wherein the range of the static moduli $S$ of said vibration damping pad layer is $0.015\mathrm{N/mm}^3$ ~$0.15\mathrm{N/mm}^3$.

The track bed resonator arranging method provided by the present invention can also have the following technical features, wherein the step S4 comprises: step S4-1, select the length and width of said vibration damping pad layer within a preset range, and calculate the total stiffness per linear meter of said track bed resonator when using vibration damping pad layer with different size and static modulus as:

$$k = \frac{\text{USM}_W \times \text{USM}_L \times n \times S}{L}$$

wherein $\text{USM}_W$ is the width of a single said vibration damping pad layer; $\text{USM}_L$ is the length of a single said vibration damping pad layer; $n$ is the number of said vibration damping pad layers; $S$ is the static moduli of a single said vibration damping pad layer; $L$ is the length of a single said resonant plate; step S4-2, according to said total stiffness, calculate the natural frequency of said track bed resonator as:

$$f_{\text{TMD}} = \frac{1}{2\pi}\sqrt{\frac{k}{m}}$$

wherein $m$ is the total mass per linear meter of said resonant plate; step S4-3, determine whether the natural frequency $f_{\text{TMD}}$ of said track bed resonator is equal to said indoor vibration resonance natural frequency, if determined yes, select the size and static moduli of the vibration damping pad layer corresponding to the natural frequency $f_{\text{TMD}}$; if determined no, continue to replace said vibration damping pad layers with vibration damping pad layers with different size or static moduli and calculate the natural frequency of the corresponding track bed resonator, until the natural frequency $f_{\text{TMD}}$ of said track bed resonator is equal to said indoor vibration resonance natural frequency.

The track bed resonator arranging method provided by the present invention can also have the following technical features, wherein the preset range of the width $\text{USM}_W$ of said vibration damping pad layer is 200mm~275mm, the preset range of the length $\text{USM}_L$ of said vibration damping pad layer is 160mm~750mm.

Effects of the invention

According to the track bed resonator arranging method of the present invention, vibration test is conducted simultaneously on the track lines and inside the building on the sensitive point near the track line as the train passes through to obtain vibration data. Therefore, the arranging range of the track bed resonator can be accurately calculated and determined based on the vibration data, and the range of the influence of the vibration response generated by the driving of the underground line train in the interior at the sensitive point is completely covered, so that the track bed resonator can achieve a better vibration reduction effect. Then, by analyzing the frequency domain of the vibration data at the sensitive point, the indoor vibration resonance natural frequency affected by the train at the sensitive point can be obtained. Furthermore, the track bed resonator is designed according to the indoor vibration resonance natural frequency, so that the natural frequency of the track bed resonator is equal to the indoor vibration resonance natural frequency. The frequency tuning effect of the track bed resonator reduces the indoor train vibration response at the sensitive point and reduces the occurrence of resonance. Finally, arranging the track bed resonator along the extension direction of the track line on the track bed within the arranging range, so that the influence of reconstruction on the existing track line is relatively small, the normal operation of the existing line is not hindered, and reconstruction cost and economic loss can be effectively reduced.

**Brief Description of the Drawings**

Fig. 1 shows a schematic structural diagram of the track bed resonator and the track system in example 1 of the present invention;
Fig.2 shows a schematic structural diagram of the limiting base in example 1 of the present invention;
Fig.3 shows a schematic diagram of the train and track line in example 1 of the present invention;
Fig. 4 shows a flowchart of the track bed resonator arranging method in example 1 of the present invention;
Fig. 5 shows a flowchart of the vibration testing in example 1 of the present invention;
Fig. 6 shows a flowchart of the vibration data calculation in example 1 of the present invention;
Fig. 7 shows a flowchart of the designing of the track bed resonator in example 1 of the present invention;
Fig. 8 shows a top view of the track bed resonator and the rail in example 1 of the present invention;
Fig. 9 shows a top view of the track bed resonator and the rail in example 1 of the present invention;
Fig. 10 shows a flowchart of the design of the track bed resonator in example 2 of the present invention.

**Detailed Description of the preferred embodiments**

In order to make the technical means, creative features, objectives and effects of the present invention easy to understand, the following provides a specific explanation of the track bed resonator arranging method of the present invention in combination with examples and figures.

Example 1

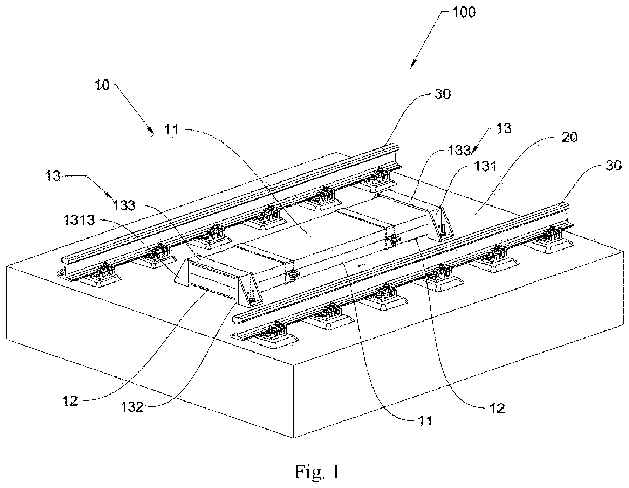

Fig. 1 shows a schematic structural diagram of the track bed resonator and the track system in example 1 of the present invention.

As shown in Fig. 1, in this example, the track bed resonator 10 comprises resonant plates 11, vibration damping pad layers 12, and limiting bases 13. The track system 100 comprises track beds 20 and two parallel rails 30 arranged on the track beds 20.

The resonant plate 11 is arranged on the track bed 20 along the extension direction of the rails 30. The resonant plate 11 comprises a metal plate and a rubber layer wrapped on the surface of the metal plate. The number of the resonant plates 11 should be at least one, and may be increased according to needs in practical applications. During installation, a plurality of resonant plates 11 may be vertically stacked and fixedly connected, or laid in parallel left and right. The thickness of resonant plate 11 ranges from 50mm to 80mm. The total thickness of the stacked resonant plates 11 should be less than the height of the rail, while the total width of the laid resonant plates 11 should be less than the distance between the two rails to avoid affecting the normal operation of the track system. In this example, the single resonant plate 11 has a width of 550mm, a length of 2200mm, a thickness of 80mm, and a mass of 500kg, that is, the mass per linear meter is 227kg.

The vibration damping pad layer 12 is arranged between the resonant plate 11 and the track bed 20, and the width of the vibration damping pad layer 12 does not exceed the width of the resonant plate 11. The lower surface of the vibration damping pad layer 12 is provided with a plurality of uniformly arranged vibration damping protrusions, which can reduce the contact area between the lower surface of the vibration damping pad layer 12 and the upper surface of the track bed 20, further reducing vibration transmission. The number of the vibration damping pad layers 12 is even, and the vibration damping pad layers 12 are divided into two groups on average. The two groups of vibration damping pad layers 12 are symmetrically arranged on the lower surface of the resonant plates 11 stacked below near both ends. The vibration damping pad layers 12 in the same group are arranged side by side along the width direction of the resonant plates 11. In this example, the number of the vibration damping pad layers 12 is four, and two vibration damping pad layers 12 form a group.

Different models of the vibration damping pad layers 12 have different static modulus, and the vibration damping pad layers 12 with specific lengths and widths may be obtained by cutting according to use requirements. When the vibration damping pad layers 12 with different static modulus or different lengths and widths are used, the natural frequencies of the track bed resonators 10 are also correspondingly different. By calculating and analyzing the vibration damping pad layers 12 with different static modulus or length-width dimensions, the appropriate vibration damping pad layer 12 is selected, so that the natural frequency of the track bed resonator can be effectively adjusted, and a better resonance effect is achieved.

The two limiting bases 13 are respectively arranged at two ends of the resonant plate 11 along the length direction of the resonant plate 11 for limiting the resonant plate 11.

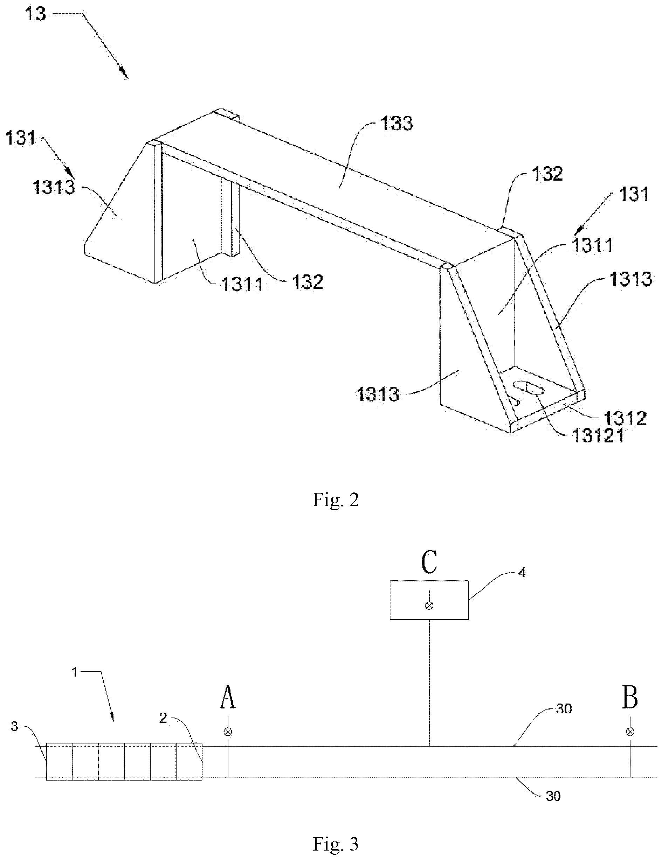

Fig.2 shows a schematic structural diagram of the limiting base in example 1 of the present invention.

As shown in Fig. 2, the limiting base 13 comprises side plates 131, limiting protrusions 132 and a top plate 133.

A pair of side plates 131 are arranged on two sides of the resonant plate 11. The side plate 131 is an L-shaped plate and comprises a vertical part 1311 and a horizontal part 1312 extending from the bottom of the vertical part 1311 to a direction away from the resonant plate 11. The side surface of the side plate 131 is provided with a reinforcing rib 1313 for connecting the vertical part 1311 and the horizontal part 1312. The horizontal part 1312 has a mounting hole 13121. The side plates 131 are fixed to the track bed 20 through bolts matched with the mounting holes 13121, so that the resonant plate 11 is horizontally limited in the direction perpendicular to the extending direction of the steel rail.

The limiting protrusion 132 is provided on the side plates 131 and extends from the side plates 131 to the resonant plate 11. The distance between the two limiting protrusions 132 is smaller than the width of the resonant plate 11, and the difference value between the distance and the width of the resonant plate 11 ranges from 20mm to 40mm, so that the resonant plate 11 is horizontally limited in the extending direction parallel to the steel rail.

The two ends of the top plate 133 are respectively connected to the tops of the pair of side plates 131. The distance between the top plate 133 and the upper surface of the track bed 20 is larger than the thickness of the resonant plate 11, and the difference value between the distance and the thickness of the resonant plate 11 ranges from 10mm to 20mm, so that the resonant plate 11 can vertically and freely vibrate in a certain space.

Fig.3 shows a schematic diagram of the train and track line in example 1 of the present invention.

As shown in Fig. 3, the train 1 running on the rail 30 comprises a head part 2 and a tail part 3. There is a building 4 located at the position near the track line which is significantly affected by the vibration of the train, that is, the building 4 is located in the sensitive point.

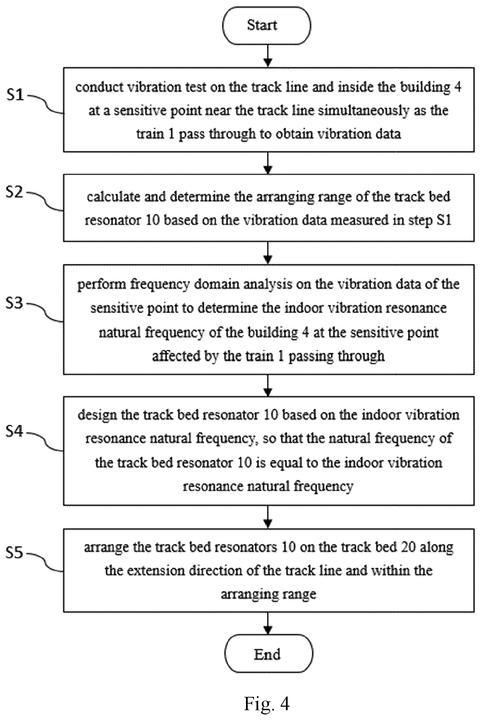

Fig. 4 shows a flowchart of the track bed resonator arranging method in example 1 of the present invention.

As shown in Fig. 4, the track bed resonator arranging method of this example specifically comprises the following steps:

Step S1, conduct vibration test on the track line and inside the building 4 at a sensitive point near the track line simultaneously to obtain vibration data.

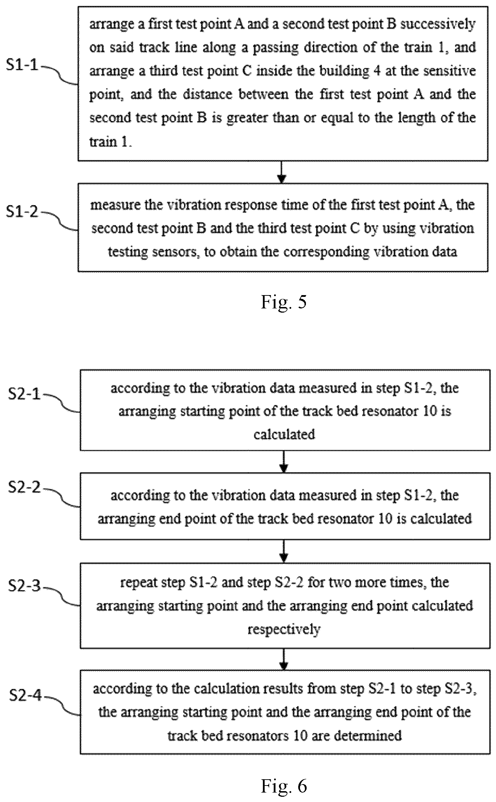

Fig. 5 shows a flowchart of the vibration testing in example 1 of the present invention.

As shown in Fig. 5, in step S1, the process of the vibration test specifically comprises the following steps:

Step S1-1, arrange a first test point A and a second test point B successively on said track line along a passing direction of the train 1, and arrange a third test point C inside the building 4 at the sensitive point, and the distance between the first test point A and the second test point B is greater than or equal to the length of the train 1.

Step S1-2, measure the vibration response time of the first test point A, the second test point B and the third test point C by using vibration testing sensors, to obtain the corresponding vibration data.

Step S2, calculate and determine the arranging range of the track bed resonator 10 based on the vibration data measured in step S1.

Fig. 6 shows a flowchart of the vibration data calculation in example 1 of the present invention.

As shown in Fig. 6, in step S2, the process of the vibration data calculation specifically comprises the following steps:

Step S2-1, according to the vibration data measured in step S1-2, the arranging starting point of the track bed resonator 10 is calculated as:

$$\mathrm{TMD}_{ips1} = mp_a + \frac{(mp_b - mp_a) \times (t_{ch1} - t_{ah1})}{t_{bh1} - t_{ah1}}$$

wherein $mp_a$ is the mileage of the first test point A relative to a nearby station on said track line; $mp_b$ is the mileage of the second test point B relative to a nearby station on said track line; $t_{ah1}$ is the vibration response time of the head part 2 of the train at the first test point A (which is approximately the time it takes for the head part 2 of the train to pass through the first test point A); $t_{bh1}$ is the vibration response time of the head part 2 of the train at the second test point B (which is approximately the time it takes for the head part 2 of the train to pass through the second test point B); $t_{ch1}$ is the vibration response time of the head part 2 of the train at the third test point C; $t_{bh1}$ - $t_{ah1}$ is the difference between the vibration response time of the head part 2 of the train at the second test point B and the vibration response time of the head part 2 of the train at the first test point A (which is approximately the time difference between the time that the head part 2 passes through the second test point B and the time that it passes through the test point A). $t_{ch1}$ - $t_{ah1}$ is the difference between the vibration response time of the head part of the train at the third test point C and the vibration response time of the head part of the train at the first test point A.

Step S2-2, according to the vibration data measured in step S1-2, the arranging end point of the track bed resonator 10 is calculated as:

$$\mathrm{TMD}_{ipe1} = mp_a + \frac{(mp_b - mp_a) \times (t_{ct1} - t_{ah1})}{t_{bh1} - t_{ah1}}$$

wherein $t_{ct1}$ is the vibration response time of the tail part 3 of the train at the third test point C; $t_{ct1}$ - $t_{ch1}$ is the time range of the overall vibration response of the train 1 at the third test point C.

Step S2-3, repeat step S1-2 to step S2-2 for two more times, the arranging starting point and the arranging end point calculated for the second time are $\mathrm{TMD}_{ips2}$ and $\mathrm{TMD}_{ipe2}$, respectively, and the arranging starting point and the arranging end point calculated for the third time are $\mathrm{TMD}_{ips3}$ and $\mathrm{TMD}_{ipe3}$, respectively.

Step S2-4, according to the calculation results from step S2-1 to step S2-3, determine that the arranging starting point of the track bed resonators 10 is $\min\{\mathrm{TMD}_{ips1}, \mathrm{TMD}_{ips2}, \mathrm{TMD}_{ips3}\}$, and the arranging end point thereof is $\max\{\mathrm{TMD}_{ipe1}, \mathrm{TMD}_{ipe2}, \mathrm{TMD}_{ipe3}\}$.

To achieve the desired resonance effect, the arranging range of the track bed resonator 10 should be larger than or equal to the length of the train 1. If the final calculation result does not meet the condition, additional extensions should be respectively added outward at the two ends, that is, the arranging starting point and the arranging end point.

Step S3, perform frequency domain analysis on the vibration data of the sensitive point to determine the indoor vibration resonance natural frequency of the building 4 at the sensitive point affected by the train 1 passing through.

Step S4, design the track bed resonator 10 based on the indoor vibration resonance natural frequency, so that the natural frequency of the track bed resonator 10 is equal to the indoor vibration resonance natural frequency.

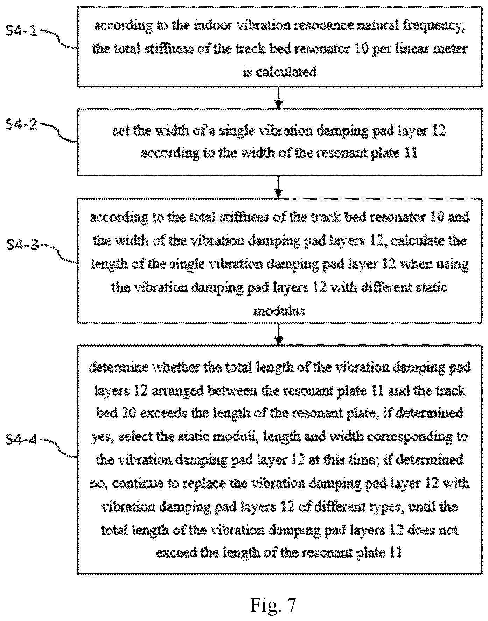

Fig. 7 shows a flowchart of the designing of the track bed resonator in example 1 of the present invention.

As shown in Fig. 7, in step S4 of this example 1, the process of designing the track bed resonator 10 specifically comprises the following steps:

Step S4-1, according to the indoor vibration resonance natural frequency, the total stiffness of the track bed resonator 10 per linear meter is calculated as:

$$k = (2\pi \times f_{TMD})^2 \times m = (2\pi \times f_{in})^2 \times m$$

wherein m is the total mass per linear meter of the resonant plate 11; $f_{TMD}$ is the natural frequency of the track bed resonator 10; $f_{in}$ is the indoor vibration resonance natural frequency.

Step S4-2, set the width of a single vibration damping pad layer 12 according to the width of the resonant plate 11 as:

$$\text{USM}_W = \frac{2W}{n}$$

Wherein $W$ is the width of the single resonant plate 11; n is the number of the vibration damping pad layers 12.

Step S4-3, according to the total stiffness of the track bed resonator 10 and the width of the vibration damping pad layers 12, calculate the length of the single vibration damping pad layer 12 when using the vibration damping pad layers 12 with different static modulus as:

$$\text{USM}_L = \frac{k \times L}{\text{USM}_W \times n \times S}$$

Wherein $S$ is the static moduli of a single vibration damping pad layer 12; L is the length of a single resonant plate 11.

Wherein the static moduli $S$ of the vibration damping pad layer 12 can be measured in advance through conventional methods. The range of static modulus $S$ corresponding to different types of the vibration damping pad layers 12 is 0.015N/mm$^3$ ~0.15N/mm$^3$.

Step S4-4, determine whether the total length of the vibration damping pad layers 12 arranged between the resonant plate 11 and the track bed 20 exceeds the length of the resonant plate, i.e., whether $2\text{USM}_L \leq L$ is valid, if determined yes, select the static moduli, length and width corresponding to the vibration damping pad layer 12 at this time; if determined no, continue to replace the vibration damping pad layers 12 with a vibration damping pad layers 12 with a different static moduli and calculate the corresponding length $\text{USM}_L$, until the total length of the vibration damping pad layers 12 does not exceed the length of the resonant plate 11.

Step S5, arrange the track bed resonators 10 on the track bed 20 along the extension direction of the track line and within the arranging range.

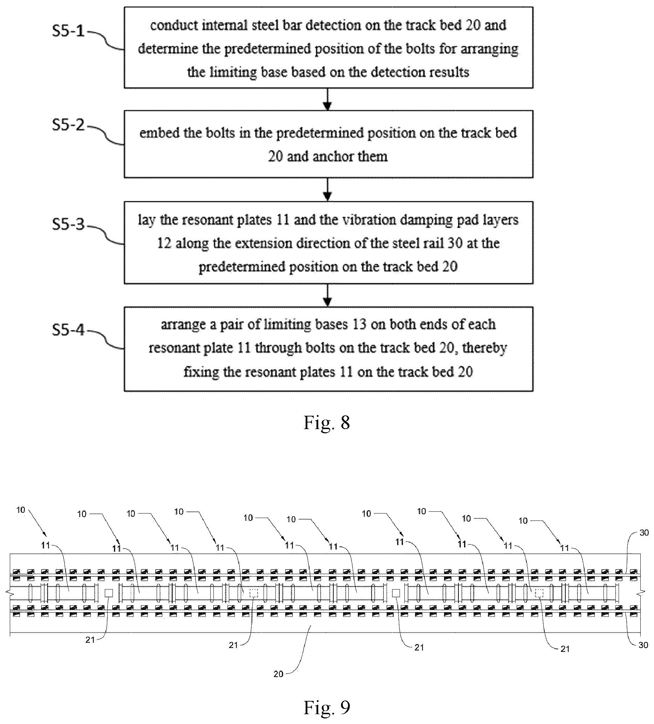

Fig. 8 shows a top view of the track bed resonator and the rail in example 1 of the present invention.

As shown in Fig. 8, in step S5, the process of arranging each of the track bed resonators 10 specifically comprises the following steps:

Step S5-1, conduct internal steel bar detection on the track bed 20 and determine the predetermined position of the bolts for arranging the limiting base based on the detection results.

Step S5-2, embed the bolts in the predetermined position on the track bed 20 and anchor them.

Step S5-3, lay the resonant plates 11 and the vibration damping pad layers 12 along the extension direction of the rail 30 at the predetermined position on the track bed 20.

Step S5-4, arrange a pair of limiting bases 13 on both ends of each resonant plate 11 through bolts on the track bed 20, thereby fixing the resonant plates 11 on the track bed 20.

Fig. 9 shows a top view of the track bed resonator and the rail in example 1 of the present invention.

As shown in Fig. 9, according to the calculated arranging range in step S2, the plurality of track bed resonators 10 are sequentially arranged on the track bed 20 along the extension direction of the rails 30. The track bed 20 is provided with a plurality of track bed inspection-observation holes 21 which are uniformly arranged in the length direction of the track bed 20. The spacing distance between two adjacent track bed resonators 10 should be greater than or equal to 20mm, and at least one of the two adjacent track bed inspection-observation holes 21 is not shielded by the track bed resonators 10.

Exampe 2

This example 2 provides a track bed resonator arranging method, and compared with the method provided in example 1, only the process of designing the track bed resonator is different. For ease of expression, in this example 2, the same symbols are given for the same structure or physical quantity as in example 1, and the same explanation is omitted.

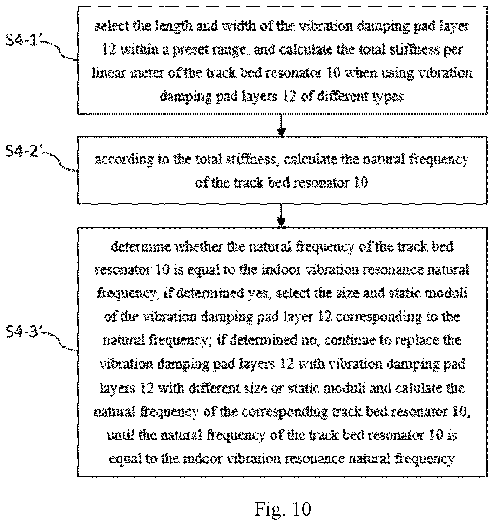

Fig. 10 shows a flowchart of the design of the track bed resonator in example 2 of the present invention.

As shown in Fig. 10, in this example 2, the process of designing the track bed resonator 10 in step S4 specifically comprises the following steps:

Step S4-1', select the length $USM_L$ and width $USM_W$ of the vibration damping pad layer 12 within a preset range, and calculate the total stiffness per linear meter of the track bed resonator 10 when using vibration damping pad layers 12 of different types (that is, with different static modulus) as:

$$k = \frac{USM_W \times USM_L \times n \times S}{L}$$

Wherein the preset range of the width $USM_W$ of the vibration damping pad layer 12 is 200mm~275mm, the preset range of the length $USM_L$ of the vibration damping pad layer 12 is 160mm~750mm.

Step S4-2', according to the total stiffness, calculate the natural frequency of the track bed resonator 10 as:

$$f_{TMD} = \frac{1}{2\pi} \sqrt{\frac{k}{m}}$$

Step S4-3', determine whether the natural frequency $f_{TMD}$ of the track bed resonator 10 is equal to the indoor vibration resonance natural frequency, if determined yes, select the size and static moduli of the vibration damping pad layer 12 corresponding to the natural frequency $f_{TMD}$; if determined no, continue to replace the vibration damping pad layers 12 with vibration damping pad layers 12 with different size or static moduli and calculate the natural frequency of the corresponding track bed resonator 10, until the natural frequency $f_{TMD}$ of the track bed resonator 10 is equal to the indoor vibration resonance natural frequency.

The natural frequency $f_{TMD}$ of the track bed resonator 10 is equal to the indoor vibration resonance natural frequency, which means the difference between the value of the natural frequency $f_{TMD}$ of the track bed resonator 10 and the value of the indoor vibration resonance natural frequency is within a preset range, such as $\pm 5\%$.

In this example 2, the values of the widths and lengths of a plurality of groups of vibration damping pad layers 12 are selected within a preset range, and the design parameters of the track bed resonators are calculated according to different indoor vibration resonance natural frequencies, as shown in table 1 below:

Table 1 the design parameters of the track bed resonators under different indoor vibration resonance natural frequencies

| No. | Indoor vibration resonance natural frequency/Hz | Design parameters of the track bed resonators | | |
| --- | --- | --- | --- | --- |
| | | Static moduli of the vibration damping pad layer/ (N/mm³) | width×length of the vibration damping pad layer /mm | The mass per linear meter of the vibration damping pad layer /kg |
| 1 | 55 | 0.15 | 270×370 | A single layer, 227 |
| | | 0.15 | 270×740 | Stacked layers, 454 |
| 2 | 40 | 0.15 | 270×195 | A single layer, 227 |
| | | 0.15 | 270×390 | Stacked layers, 454 |
| 3 | 30 | 0.10 | 250×180 | A single layer, 227 |
| | | 0.10 | 250×360 | Stacked layers, 454 |

(continued)

| No. | Indoor vibration resonance natural frequency/Hz | Design parameters of the track bed resonators | | |
|---|---|---|---|---|
| | | Static moduli of the vibration damping pad layer/ (N/mm$^3$) | width×length of the vibration damping pad layer /mm | The mass per linear meter of the vibration damping pad layer /kg |
| 4 | 20 | 0.05 | 250×160 | A single layer, 227 |
| | | 0.05 | 250×320 | Stacked layers, 454 |
| 5 | 10 | 0.015 | 200×166 | A single layer, 227 |
| | | 0.015 | 200×333 | Stacked layers, 454 |

In this example 2, the other processes are the same as in example 1, and therefore the description is not repeated any more.

Effects of the examples

According to the track bed resonator arranging method of the present invention, vibration test is conducted simultaneously on the track lines and inside the building on the sensitive point near the track line as the train passes through to obtain vibration data. Therefore, the arranging range of the track bed resonator can be accurately calculated and determined based on the vibration data, and the range of the influence of the vibration response generated by the driving of the underground line train in the interior at the sensitive point is completely covered, so that the track bed resonator can achieve a better vibration reduction effect.

By analyzing the frequency domain of the vibration data at the sensitive point, the indoor vibration resonance natural frequency affected by the train at the sensitive point can be obtained. Furthermore, the track bed resonator is designed according to the indoor vibration resonance natural frequency, so that the natural frequency of the track bed resonator is equal to the indoor vibration resonance natural frequency. The frequency tuning effect of the track bed resonator reduces the indoor train vibration response at the sensitive point and reduces the occurrence of resonance.

Arranging the track bed resonator along the extension direction of the track line on the track bed within the arranging range, so that the influence of reconstruction on existing track line is relatively small, the normal operation of the existing line is not hindered, and reconstruction cost and economic loss can be effectively reduced.

The above examples are the prefered implementation of the present invention, and is not intended to limit the scope of the protection of the present invention.

**Claims**

1.  A track bed resonator arranging method, for arranging track bed resonators (10) on a track line, each of said track bed resonators (10) comprises a resonant plate (11) and a vibration damping pad layer (12), **characterized by** comprising:

    step S1, conduct vibration test on said track line and inside a building (4) at a sensitive point near said track line that is greatly affected by the vibration caused by train (1) passing as the train passes through, to obtain vibration data;
    step S2, calculate and determine the arranging range of said track bed resonators (10) based on said vibration data measured in step S1, wherein said arranging range is a range on a track bed (20) for installing said track bed resonators (10), and said arranging range has an arranging starting point and an arranging end point;
    step S3, perform frequency domain analysis on said vibration data of said sensitive point to determine the indoor vibration resonance natural frequency of the building (4) at said sensitive point affected by train passing through;
    step S4, design said track bed resonators (10) based on said indoor vibration resonance natural frequency, so that the natural frequency of said track bed resonators (10) is equal to said indoor vibration resonance natural frequency;
    step S5, arrange said track bed resonators (10) on said track bed (20) along the extension direction of said track line and within said arranging range.

2.  The track bed resonator arranging method according to claim 1, **characterized in that**:

said step S1 comprises:

step S1-1, arrange a first test point (A) and a second test point (B) successively on said track line along the passing direction of said train, and arrange a third test point (C) inside the building (4) at said sensitive point;

step S1-2, measure the vibration response time of said first test point (A), said second test point (B) and said third test point (C) by using vibration testing sensors, to obtain the corresponding vibration data.

3. The track bed resonator arranging method according to claim 2, **characterized in that**:
the distance between said first test point (A) and said second test point (B) is greater than or equal to the length of said train.

4. The track bed resonator arranging method according to claim 2, **characterized in that**:
said step S2 comprises:

step S 2-1, according to said vibration data measured in step S1-2, the arranging starting point of said track bed resonators is calculated as:

$$\mathrm{TMD}_{ips1} = mp_a + \frac{(mp_b - mp_a) \times (t_{ch1} - t_{ah1})}{t_{bh1} - t_{ah1}}$$

wherein $mp_a$ is the mileage of said first test point relative to a nearby station on said track line; $mp_b$ is the mileage of said second test point relative to a nearby station on said track line; $t_{ah1}$ is the vibration response time of the head of said train at said first test point (A); $t_{bh1}$ is the vibration response time of the head of said train at said second test point (B); $t_{ch1}$ is the vibration response time of the head of said train at said third test point (C);

step S2-2, according to said vibration data measured in step S1-2, the arranging end point of said track bed resonators (10) is calculated as:

$$\mathrm{TMD}_{ipe1} = mp_a + \frac{(mp_b - mp_a) \times (t_{ct1} - t_{ah1})}{t_{bh1} - t_{ah1}}$$

wherein $t_{ct1}$ is the vibration response time of the tail of said train at said third test point (C).

5. The track bed resonator arranging method according to claim 4, **characterized in that**:
said step S2 further comprises:

step S2-3, repeat step S1-2 to step S2-2 for two more times, said arranging starting point and said arranging end point calculated for the second time are $\mathrm{TMD}_{ips2}$ and $\mathrm{TMD}_{ipe2}$, respectively, and said arranging starting point and said arranging end point calculated for the third time are $\mathrm{TMD}_{ips3}$ and $\mathrm{TMD}_{ipe3}$, respectively;

step S2-4, according to the calculation results from step S2-1 to step S2-3, determine that the arranging starting point of said track bed resonators (10) is min$\{\mathrm{TMD}_{ips1}, \mathrm{TMD}_{ips2}, \mathrm{TMD}_{ips3}\}$, and the arranging end point thereof is max$\{\mathrm{TMD}_{ipe1}, \mathrm{TMD}_{ipe2}, \mathrm{TMD}_{ipe3}\}$.

6. The track bed resonator arranging method according to claim 1, **characterized in that**:
the arranging range of said track bed resonators (10) is larger than or equal to the length of said train.

7. The track bed resonator arranging method according to claim 1, **characterized in that**:
said step S4 comprises:

step S4-1, according to said indoor vibration resonance natural frequency, the total stiffness of said track bed resonators (10) per linear meter is:

$$k = (2\pi \times f_{TMD})^2 \times m = (2\pi \times f_{in})^2 \times m$$

wherein m is the total mass per linear meter of said resonant plate (11); $f_{TMD}$ is the natural frequency of said track bed resonators (10); $f_{in}$ is said indoor vibration resonance natural frequency;

step S4-2, set the width of a single said vibration damping pad layer (12) according to the width of said resonant plate (11) as:

$$USM_W = \frac{2W}{n}$$

wherein $W$ is the width of a single said resonant plate (11); n is the number of said vibration damping pad layers (12);

step S4-3, according to the total stiffness of said track bed resonators (10) and the width of said vibration damping pad layers (12), calculate the length of a single said vibration damping pad layer (12) when using said vibration damping pad layers (12) with different static modulus as:

$$USM_L = \frac{k \times L}{USM_W \times n \times S}$$

wherein $S$ is the static moduli of a single said vibration damping pad layer (12); $L$ is the length of a single resonant plate (11);

step S4-4, determine whether the total length of said vibration damping pad layer (12) exceeds the length of said resonant plate (11), i.e., whether $2USM_L \leq L$ is valid, if determined yes, select the static moduli, length and width corresponding to said vibration damping pad layers (12) at this time; if determined no, continue to replace said vibration damping pad layers (12) with vibration damping pad layers (12) with a different static moduli and calculate the corresponding length $USM_L$, until the total length of said vibration damping pad layers (12) does not exceed the length of said resonant plate (11).

8. The track bed resonator arranging method according to claim 7, **characterized in that**:
the range of the static moduli $S$ of said vibration damping pad layer (12) is 0.015N/mm$^3$ ~0.15N/mm$^3$.

9. The track bed resonator arranging method according to claim 1, **characterized in that**:
said step S4 comprises:

step S4-1, select the length and width of said vibration damping pad layer (12) within a preset range, and calculate the total stiffness per linear meter of said track bed resonators (10) when using vibration damping pad layers (12) with different size and static modulus as:

$$k = \frac{USM_W \times USM_L \times n \times S}{L}$$

wherein $USM_W$ is the width of a single said vibration damping pad layer (12); $USM_L$ is the length of a single said vibration damping pad layer (12); $n$ is the number of said vibration damping pad layers (12); $S$ is the static moduli of a single said vibration damping pad layer (12); $L$ is the length of a single said resonant plate (11);

step S4-2, according to said total stiffness, calculate the natural frequency of said track bed resonators (10) as:

$$f_{TMD} = \frac{1}{2\pi} \sqrt{\frac{k}{m}}$$

wherein $m$ is the total mass per linear meter of said resonant plate (11);

step S4-3, determine whether the natural frequency $f_{TMD}$ of said track bed resonators (10) is equal to said indoor vibration resonance natural frequency, if determined yes, select the size and static moduli of the vibration damping pad layer (12) corresponding to the natural frequency $f_{TMD}$; if determined no, continue to replace said vibration damping pad layers (12) with vibration damping pad layers (12) with different size or static moduli and calculate the natural frequency of the corresponding track bed resonators (10), until the natural frequency $f_{TMD}$ of said track bed resonators (10) is equal to said indoor vibration resonance natural frequency.

10. The track bed resonator arranging method according to claim 9, **characterized in that**:
the preset range of the width $USM_W$ of said vibration damping pad layer (12) is 200mm~275mm, the preset range of the length $USM_L$ of said vibration damping pad layer (12) is 160mm~750mm.

**Patentansprüche**

1. Verfahren zum Anordnen von Gleisbett-Resonatoren zum Anordnen von Gleisbett-Resonatoren (10) an einem Gleisstrang, wobei jeder der Gleisbett-Resonatoren (10) eine Resonanzplatte (11) und eine vibrationsdämpfende Unterlageschicht (12) umfasst, **dadurch gekennzeichnet, dass** es Folgendes umfasst:

    Schritt S1, Ausführen eines Vibrationstests an dem Gleisstrang und innerhalb eines Gebäudes (4) an einem sensiblen Punkt in der Nähe des Gleisstrangs, der stark durch die Vibrationen beeinträchtigt ist, die durch den durchfahrenden Zug (1) verursacht werden, wenn der Zug durchfährt, um Vibrationsdaten zu erlangen;
    Schritt S2, Berechnen und Bestimmen des Anordnungsbereichs der Gleisbett-Resonatoren (10) auf Grundlage der in Schritt S1 gemessenen Vibrationsdaten, wobei der Anordnungsbereich ein Bereich auf einem Gleisbett (20) zum Installieren der Gleisbett-Resonatoren (10) ist und der Anordnungsbereich einen Anordnungsstartpunkt und einen Anordnungsendpunkt aufweist;
    Schritt S3, Durchführen einer Frequenzdomänenanalyse an den Vibrationsdaten des sensiblen Punkts, um die Innenvibrationsresonanz-Eigenfrequenz des Gebäudes (4) an dem sensiblen Punkt zu bestimmen, der durch einen durchfahrenden Zug beeinträchtigt ist;
    Schritt S4, Entwerfen der Gleisbett-Resonatoren (10) auf Grundlage der Innenvibrationsresonanz-Eigenfrequenz, sodass die Eigenfrequenz der Gleisbett-Resonatoren (10) gleich der Innenvibrationsresonanz-Eigenfrequenz ist;
    Schritt S5, Anordnen der Gleisbett-Resonatoren (10) auf dem Gleisbett (20) entlang der Erstreckungsrichtung des Gleisstrangs und innerhalb des Anordnungsbereichs.

2. Verfahren zum Anordnen von Gleisbett-Resonatoren nach Anspruch 1, **dadurch gekennzeichnet, dass**:
    der Schritt S1 Folgendes umfasst:

    Schritt S1-1, Anordnen eines ersten Testpunkts (A) und eines zweiten Testpunkts (B) aufeinanderfolgend auf dem Gleisstrang entlang der Durchfahrtsrichtung des Zugs und Anordnen eines dritten Testpunkts (C) innerhalb des Gebäudes (4) an dem sensiblen Punkt;
    Schritt S1-2, Messen der Vibrationsantwortzeit des ersten Testpunkts (A), des zweiten Testpunkts (B) und des dritten Testpunkts (C) unter Verwendung von Vibrationstestsensoren, um die entsprechenden Vibrationsdaten zu erlangen.

3. Verfahren zum Anordnen von Gleisbett-Resonatoren nach Anspruch 2, **dadurch gekennzeichnet, dass**:
    der Abstand zwischen dem ersten Testpunkt (A) und dem zweiten Testpunkt (B) größer oder gleich der Länge des Zugs ist.

4. Verfahren zum Anordnen von Gleisbett-Resonatoren nach Anspruch 2, **dadurch gekennzeichnet, dass**:
    der Schritt S2 Folgendes umfasst:

    Schritt S2-1, gemäß den in Schritt S1-2 gemessenen Vibrationsdaten, der Anordnungsstartpunkt der Gleisbett-Resonatoren wie folgt berechnet wird:

$$\text{TMD}_{ips1} = mp_a + \frac{(mp_b - mp_a) \times (t_{ch1} - t_{ah1})}{t_{bh1} - t_{ah1}}$$

    wobei $mp_a$ die Wegstrecke des ersten Testpunkts relativ zu einer nahe gelegenen Station an dem Gleisstrang ist; $mp_b$ die Wegstrecke des zweiten Testpunkts relativ zu einer nahe gelegenen Station an dem Gleisstrang ist; $t_{ah1}$ die Vibrationsantwortzeit der Zugspitze an dem ersten Testpunkt (A) ist; $t_{bh1}$ die Vibrationsantwortzeit des Zugkopfs an dem zweiten Testpunkt (B) ist; $t_{ch1}$ die Vibrationsantwortzeit der Zugspitze an dem dritten Testpunkt (C) ist;
    Schritt S2-2, gemäß den in Schritt S1-2 gemessenen Vibrationsdaten, der Anordnungsendpunkt der Gleisbett-Resonatoren (10) wie folgt berechnet wird:

$$\text{TMD}_{ipe1} = mp_a + \frac{(mp_b - mp_a) \times (t_{ct1} - t_{ah1})}{t_{bh1} - t_{ah1}}$$

wobei $t_{ct1}$ die Vibrationsantwortzeit des Schlusses des Zugs an dem dritten Testpunkt (C) ist.

5. Verfahren zum Anordnen von Gleisbett-Resonatoren nach Anspruch 4, **dadurch gekennzeichnet, dass**: der Schritt S2 ferner Folgendes umfasst:

   Schritt S2-3, Wiederholen von Schritt S1-2 bis Schritt S2-2 zwei weitere Male, wobei der Anordnungsstartpunkt und der Anordnungsendpunkt, die zum zweiten Mal berechnet werden, $\text{TMD}_{ips2}$ beziehungsweise $\text{TMD}_{ipe2}$ sind, und der Anordnungsstartpunkt und der Anordnungsendpunkt, die zum dritten Mal berechnet werden, $\text{TMD}_{ips3}$ beziehungsweise $\text{TMD}_{ipe3}$ sind;
   Schritt S2-4, gemäß den Berechnungsergebnissen von Schritt S2-1 bis Schritt S2-3, Bestimmen, dass der Anordnungsstartpunkt der Gleisbett-Resonatoren (10) $\min\{\text{TMD}_{ips1}, \text{TMD}_{ips2}, \text{TMD}_{ips3}\}$ ist und der Anordnungsendpunkt davon $\max\{\text{TMD}_{ipe1}, \text{TMD}_{ipe2}, \text{TMD}_{ipe3}\}$ ist.

6. Verfahren zum Anordnen von Gleisbett-Resonatoren nach Anspruch 1, **dadurch gekennzeichnet, dass**: der Anordnungsbereich der Gleisbett-Resonatoren (10) größer oder gleich der Länge des Zugs ist.

7. Verfahren zum Anordnen von Gleisbett-Resonatoren nach Anspruch 1, **dadurch gekennzeichnet, dass**: der Schritt S4 Folgendes umfasst:

   Schritt S4-1, gemäß der Innenvibrationsresonanz-Eigenfrequenz, die Gesamtsteifigkeit der Gleisbett-Resonatoren (10) pro laufendem Meter wie folgt ist:

   $$k = (2\pi \times f_{TMD})^2 \times m = (2\pi \times f_{in})^2 \times m$$

   wobei $m$ die Gesamtmasse pro laufendem Meter der Resonanzplatte (11) ist; $f_{TMD}$ die Eigenfrequenz der Gleisbett-Resonatoren (10) ist; $f_{in}$ die Innenvibrationsresonanz-Eigenfrequenz ist;
   Schritt S4-2, Einstellen der Breite einer einzelnen vibrationsdämpfenden Unterlageschicht (12) gemäß der Breite der Resonanzplatte (11) wie folgt:

   $$\text{USM}_W = \frac{2W}{n}$$

   wobei $W$ die Breite einer einzelnen Resonanzplatte (11) ist; $n$ die Anzahl der vibrationsdämpfenden Unterlageschichten (12) ist;
   Schritt S4-3, gemäß der Gesamtsteifigkeit der Gleisbett-Resonatoren (10) und der Breite der vibrationsdämpfenden Unterlageschichten (12), Berechnen der Länge einer einzelnen der vibrationsdämpfenden Unterlageschichten (12) bei Verwendung der vibrationsdämpfenden Unterlageschichten (12) mit unterschiedlichem statischem Modul wie folgt:

   $$\text{USM}_L = \frac{k \times L}{\text{USM}_W \times n \times S}$$

   wobei $S$ die statischen Moduln einer einzelnen vibrationsdämpfenden Unterlageschicht (12) ist; $L$ die Länge einer einzelnen Resonanzplatte (11) ist;
   Schritt S4-4, Bestimmen, ob die Gesamtlänge der vibrationsdämpfenden Unterlageschicht (12) die Länge der Resonanzplatte (11) übersteigt, d. h. ob $2\text{USM}_L \leq L$ gültig ist, falls bestimmt als ja, Auswählen der statischen Moduln, der Länge und der Breite, die den vibrationsdämpfenden Unterlageschichten (12) zu diesem Zeitpunkt entsprechen; falls bestimmt als nein, Fortsetzen, die vibrationsdämpfenden Unterlageschichten (12) durch vibrationsdämpfende Unterlageschichten (12) mit einem unterschiedlichen statischen Modul zu ersetzen und die entsprechende Länge $\text{USM}_L$ zu berechnen, bis die Gesamtlänge der vibrationsdämpfenden Unterlageschichten (12) die Länge der Resonanzplatte (11) nicht überschreitet.

8. Verfahren zum Anordnen von Gleisbett-Resonatoren nach Anspruch 7, **dadurch gekennzeichnet, dass**: der Bereich der statischen Moduln $S$ der vibrationsdämpfenden Unterlageschicht (12) *0,015* N/mm$^3$ ~0,15 N/mm$^3$ beträgt.

9. Verfahren zum Anordnen von Gleisbett-Resonatoren nach Anspruch 1, **dadurch gekennzeichnet, dass**:
der Schritt S4 Folgendes umfasst:

Schritt S4-1, Auswählen der Länge und Breite der vibrationsdämpfenden Unterlageschicht (12) innerhalb eines voreingestellten Bereichs und Berechnen der Gesamtsteifigkeit pro laufendem Meter der Gleisbett-Resonatoren (10) bei Verwendung von vibrationsdämpfenden Unterlageschichten (12) mit unterschiedlicher Größe und unterschiedlichem statischem Modul wie folgt:

$$k = \frac{\mathrm{USM}_W \times \mathrm{USM}_L \times n \times S}{L}$$

wobei $\mathrm{USM}_W$ die Breite einer einzelnen vibrationsdämpfenden Unterlageschicht (12) ist; $\mathrm{USM}_L$ die Länge einer einzelnen vibrationsdämpfenden Unterlageschicht (12) ist; $n$ die Anzahl von vibrationsdämpfenden Unterlageschichten (12) ist; $S$ die statischen Moduln einer einzelnen vibrationsdämpfenden Unterlageschicht (12) ist; $L$ die Länge einer einzelnen Resonanzplatte (11) ist;
Schritt S4-2, gemäß der Gesamtsteifigkeit, Berechnen der Eigenfrequenz der Gleisbett-Resonatoren (10) wie folgt:

$$f_{\mathrm{TMD}} = \frac{1}{2\pi}\sqrt{\frac{k}{m}}$$

wobei m die Gesamtmasse pro laufendem Meter der Resonanzplatte (11) ist;
Schritt S4-3, Bestimmen, ob die Eigenfrequenz $f_{\mathrm{TMD}}$ der Gleisbett-Resonatoren (10) gleich der Innenvibrationsresonanz-Eigenfrequenz ist, falls bestimmt als ja, Auswählen der Größe und der statischen Moduln der vibrationsdämpfenden Unterlageschicht (12), die der Eigenfrequenz $f_{\mathrm{TMD}}$ entsprechen; falls bestimmt als nein, Fortsetzen, die vibrationsdämpfenden Unterlageschichten (12) durch vibrationsdämpfende Unterlageschichten (12) mit unterschiedlicher Größe oder unterschiedlichen statischen Moduln zu ersetzen und die Eigenfrequenz der entsprechenden Gleisbett-Resonatoren (10) zu berechnen, bis die Eigenfrequenz $f_{\mathrm{TDM}}$ der Gleisbett-Resonatoren (10) gleich der Innenvibrationsresonanz-Eigenfrequenz ist.

10. Verfahren zum Anordnen von Gleisbett-Resonatoren nach Anspruch 9, **dadurch gekennzeichnet, dass**:
der voreingestellte Bereich der Breite $\mathrm{USM}_W$ der vibrationsdämpfenden Unterlageschicht (12) 200 mm~275 mm beträgt, der voreingestellte Bereich der Länge $\mathrm{USM}_L$ der vibrationsdämpfenden Unterlageschicht (12) 160 mm~750 mm beträgt.

## Revendications

1. Procédé d'implantation de résonateurs à lit de ballast, permettant d'implanter des résonateurs à lit de ballast (10) le long d'une voie ferrée, chacun desdits résonateurs à lit de ballast (10) comprend une plaque résonante (11) et une couche de tampon amortisseur de vibrations (12), **caractérisé en ce qu'**il comprend :

l'étape S1, consistant à effectuer, lors du passage du train, un test de vibrations sur ladite voie ferrée et à l'intérieur d'un bâtiment (4), en un point sensible proche de ladite voie ferrée et qui est fortement affecté par les vibrations causées par le passage du train (1), afin d'obtenir des données de vibrations ;
l'étape S2, consistant à calculer et déterminer la plage d'implantation desdits résonateurs à lit de ballast (10) sur la base desdites données de vibrations mesurées à l'étape S1, dans lequel ladite plage d'implantation est une plage du lit de ballast (20) destinée à l'installation desdits résonateurs à lit de ballast (10), et ladite plage d'implantation a un point de début d'implantation et un point de fin d'implantation ;
l'étape S3, consistant à effectuer une analyse dans le domaine fréquentiel desdites données de vibrations dudit point sensible afin de déterminer la fréquence naturelle de résonance vibratoire à l'intérieur du bâtiment (4) audit point sensible affecté par le passage du train ;
l'étape S4, consistant à concevoir lesdits résonateurs à lit de ballast (10) sur la base de ladite fréquence naturelle de résonance vibratoire à l'intérieur, de sorte que la fréquence naturelle desdits résonateurs à lit de ballast (10) soit égale à ladite fréquence naturelle de résonance vibratoire à l'intérieur ;
l'étape S5, consistant à implanter lesdits résonateurs à lit de ballast (10) sur ledit lit de ballast (20) selon la direction d'extension de ladite voie ferrée et à l'intérieur de ladite plage d'implantation.

2. Procédé d'implantation de résonateurs à lit de ballast selon la revendication 1, **caractérisé en ce que** :
ladite étape S1 comprend :

l'étape S1-1, consistant à implanter un premier point de test (A) et un deuxième point de test (B) successivement sur ladite voie ferrée selon la direction de passage dudit train, et à implanter un troisième point de test (C) à l'intérieur du bâtiment (4) audit point sensible ;
l'étape S1-2, consistant à mesurer le temps de réponse vibratoire dudit premier point de test (A), dudit deuxième point de test (B) et dudit troisième point de test (C) en utilisant des capteurs de test de vibrations, afin d'obtenir les données de vibrations correspondantes.

3. Procédé d'implantation de résonateurs à lit de ballast selon la revendication 2, **caractérisé en ce que** :
la distance entre ledit premier point de test (A) et ledit deuxième point de test (B) est supérieure ou égale à la longueur dudit train.

4. Procédé d'implantation de résonateurs à lit de ballast selon la revendication 2, **caractérisé en ce que** :
ladite étape S2 comprend :

l'étape S2-1, selon lesdites données de vibrations mesurées à l'étape S1-2, le point de début d'implantation desdits résonateurs à lit de ballast est calculé comme suit :

$$\mathrm{TMD}_{ips1} = mp_a + \frac{(mp_b - mp_a) \times (t_{ch1} - t_{ah1})}{t_{bh1} - t_{ah1}}$$

dans lequel $mp_a$ est le kilométrage dudit premier point de test par rapport à une station voisine sur ladite voie ferrée ; $mp_b$ est le kilométrage dudit deuxième point de test par rapport à une station voisine sur ladite voie ferrée ; $t_{ah1}$ est le temps de réponse vibratoire de la tête dudit train audit premier point de test (A) ; $t_{bh1}$ est le temps de réponse vibratoire de la tête dudit train audit deuxième point de test (B) ; $t_{ch1}$ est le temps de réponse vibratoire de la tête dudit train audit troisième point de test (C) ;
l'étape S2-2, selon lesdites données de vibrations mesurées à l'étape S1-2, le point de fin d'implantation desdits résonateurs à lit de ballast (10) est calculé comme suit :

$$\mathrm{TMD}_{ipe1} = mp_a + \frac{(mp_b - mp_a) \times (t_{ct1} - t_{ah1})}{t_{bh1} - t_{ah1}}$$

dans lequel $t_{ct1}$ est le temps de réponse vibratoire de la queue dudit train audit troisième point de test (C).

5. Procédé d'implantation de résonateurs à lit de ballast selon la revendication 4, **caractérisé en ce que** :
ladite étape S2 comprend en outre :

l'étape S2-3, consistant à répéter l'étape S1-2 à l'étape S2-2 deux fois de plus, ledit point de début d'implantation et ledit point de fin d'implantation calculés pour la deuxième fois sont TMD$_{ips2}$ et TMD$_{ipe2}$, respectivement, et ledit point de début d'implantation et ledit point de fin d'implantation calculés pour la troisième fois sont TMD$_{ips3}$ et TMD$_{ipe3}$, respectivement ;
l'étape S2-4, selon les résultats de calcul de l'étape S2-1 à l'étape S2-3, consistant à déterminer que le point de début d'implantation desdits résonateurs à lit de ballast (10) est min{TMD$_{ips1}$, TMD$_{ips2}$, TMD$_{ips3}$}, et le point de fin d'implantation de ceux-ci est max{TMD$_{ipe1}$, TMD$_{ipe2}$, TMD$_{ipe3}$}.

6. Procédé d'implantation de résonateurs à lit de ballast selon la revendication 1, **caractérisé en ce que** :
la plage d'implantation desdits résonateurs à lit de ballast (10) est supérieure ou égale à la longueur dudit train.

7. Procédé d'implantation de résonateurs à lit de ballast selon la revendication 1, **caractérisé en ce que** :
ladite étape S4 comprend :

l'étape S4-1, selon ladite fréquence naturelle de résonance vibratroire à l'intérieur, la rigidité totale desdits résonateurs à lit de ballast (10) par mètre linéaire est :

$$k = (2\pi \times f_{TMD})^2 \times m = (2\pi \times f_{in})^2 \times m$$

dans lequel $m$ est la masse totale par mètre linéaire de ladite plaque résonante (11) ; $f_{TMD}$ est la fréquence naturelle desdits résonateurs à lit de ballast (10) ; $f_{in}$ est ladite fréquence naturelle de résonance vibratoire à l'intérieur ;

l'étape S4-2, consistant à définir la largeur d'une seule dite couche de tampon amortisseur de vibrations (12) en fonction de la largeur de ladite plaque résonante (11) comme suit :

$$USM_W = \frac{2W}{n}$$

dans lequel $W$ est la largeur d'une seule dite plaque résonante (11) ; $n$ est le nombre desdites couches de tampon amortisseur de vibrations (12) ;

l'étape S4-3, en fonction de la rigidité totale desdits résonateurs à lit de ballast (10) et de la largeur desdites couches de tampon amortisseur de vibrations (12), consistant à calculer la longueur d'une seule dite couche de tampon amortisseur de vibrations (12) lors de l'utilisation desdites couches de tampon amortisseur de vibrations (12) avec un module statique différent comme suit :

$$USM_L = \frac{k \times L}{USM_W \times n \times S}$$

dans lequel $S$ est le module statique d'une seule dite couche de tampon amortisseur de vibrations (12) ; $L$ est la longueur d'une seule plaque résonante (11) ;

l'étape S4-4, consistant à déterminer si la longueur totale de ladite couche de tampon amortisseur de vibrations (12) dépasse la longueur de ladite plaque résonante (11), c'est-à-dire si $2USM_L \leq L$ est valide, si déterminé oui, sélectionner les modules statiques, la longueur et la largeur correspondant auxdites couches de tampon amortisseur de vibrations (12) à ce moment ; si déterminé non, continuer à remplacer lesdites couches de tampon amortisseur des vibrations (12) par des couches de tampon amortisseur de vibrations (12) avec des modules statiques différents et calculer la longueur correspondante $USM_L$, jusqu'à ce que la longueur totale desdites couches de tampon amortisseur de vibrations (12) ne dépasse pas la longueur de ladite plaque résonante (11).

8. Procédé d'implantation de résonateurs à lit de ballast selon la revendication 7, **caractérisé en ce que** :
la plage des modules statiques $S$ de ladite couche de tampon amortisseur de vibrations (12) est de 0,015N mm$^3$ ~0,15N mm$^3$.

9. Procédé d'implantation de résonateurs à lit de ballast selon la revendication 1, **caractérisé en ce que** :
ladite étape S4 comprend :

l'étape S4-1, sélectionner la longueur et la largeur de ladite couche de tampon amortisseur de vibrations (12) dans une plage prédéfinie, et calculer la rigidité totale par mètre linéaire desdits résonateurs à lit de ballast (10) lors de l'utilisation de couches de tampon amortisseur de vibrations (12) avec une taille et un module statique différents comme suit :

$$k = \frac{USM_W \times USM_L \times n \times S}{L}$$

dans lequel $USM_W$ est la largeur d'une seule dite couche de tampon amortisseur de vibrations (12) ; $USM_L$ est la longueur d'une seule dite couche de tampon amortisseur de vibrations (12) ; n est le nombre desdites couches de tampon amortisseur de vibrations (12) ; $S$ est le module statique d'une seule dite couche de tampon amortisseur de vibrations (12) ; $L$ est la longueur d'une seule dite plaque résonante (11) ;

l'étape S4-2, selon ladite rigidité totale, calculer la fréquence naturelle desdits résonateurs à lit de ballast (10) comme suit :

$$f_{\text{TMD}} = \frac{1}{2\pi}\sqrt{\frac{k}{m}}$$

dans lequel $m$ est la masse totale par mètre linéaire de ladite plaque résonante (11) ;

l'étape S4-3, déterminer si la fréquence naturelle $f_{\text{TMD}}$ desdits résonateurs à lit de ballast (10) est égale à ladite fréquence naturelle de résonance de vibration intérieure, si déterminé oui, sélectionner la taille et les modules statiques de la couche de tampon amortisseur de vibrations (12) correspondant à la fréquence naturelle $f_{\text{TMD}}$ ; si déterminé non, continuer à remplacer lesdites couches de tampon amortisseur de vibrations (12) par des couches de tampon amortisseur de vibrations (12) avec une taille ou des modules statiques différents et calculer la fréquence naturelle des résonateurs à lit de ballast (10) correspondants, jusqu'à ce que la fréquence naturelle $f_{\text{TMD}}$ desdits résonateurs à lit de ballast (10) soit égale à ladite fréquence naturelle de résonance de vibration intérieure.

10. Procédé d'implantation de résonateurs à lit de ballast selon la revendication 9, **caractérisé en ce que** :
la plage prédéfinie de la largeur $\text{USM}_W$ de ladite couche de tampon amortisseur de vibrations (12) est de 200 mm~275 mm, la plage prédéfinie de la longueur $\text{USM}_L$ de ladite couche de tampon amortisseur de vibrations (12) est de 160 mm~750 mm.

Fig. 1

Fig. 2

Fig. 3

Fig. 4

EP 4 365 560 B1

| | arrange a first test point A and a second test point B successively on said track line along a passing direction of the train 1, and arrange a third test point C inside the building 4 at the sensitive point, and the distance between the first test point A and the second test point B is greater than or equal to the length of the train 1. |
| --- | --- |
| S1-1 | |
| S1-2 | measure the vibration response time of the first test point A, the second test point B and the third test point C by using vibration testing sensors, to obtain the corresponding vibration data |

Fig. 5

| | according to the vibration data measured in step S1-2, the arranging starting point of the track bed resonator 10 is calculated |
| --- | --- |
| S2-1 | |
| S2-2 | according to the vibration data measured in step S1-2, the arranging end point of the track bed resonator 10 is calculated |
| S2-3 | repeat step S1-2 and step S2-2 for two more times, the arranging starting point and the arranging end point calculated respectively |
| S2-4 | according to the calculation results from step S2-1 to step S2-3, the arranging starting point and the arranging end point of the track bed resonators 10 are determined |

Fig. 6

21

S4-1 — according to the indoor vibration resonance natural frequency, the total stiffness of the track bed resonator 10 per linear meter is calculated

S4-2 — set the width of a single vibration damping pad layer 12 according to the width of the resonant plate 11

S4-3 — according to the total stiffness of the track bed resonator 10 and the width of the vibration damping pad layers 12, calculate the length of the single vibration damping pad layer 12 when using the vibration damping pad layers 12 with different static modulus

S4-4 — determine whether the total length of the vibration damping pad layers 12 arranged between the resonant plate 11 and the track bed 20 exceeds the length of the resonant plate, if determined yes, select the static moduli, length and width corresponding to the vibration damping pad layer 12 at this time; if determined no, continue to replace the vibration damping pad layer 12 with vibration damping pad layers 12 of different types, until the total length of the vibration damping pad layers 12 does not exceed the length of the resonant plate 11

Fig. 7

S5-1 — conduct internal steel bar detection on the track bed 20 and determine the predetermined position of the bolts for arranging the limiting base based on the detection results

S5-2 — embed the bolts in the predetermined position on the track bed 20 and anchor them

S5-3 — lay the resonant plates 11 and the vibration damping pad layers 12 along the extension direction of the steel rail 30 at the predetermined position on the track bed 20

S5-4 — arrange a pair of limiting bases 13 on both ends of each resonant plate 11 through bolts on the track bed 20, thereby fixing the resonant plates 11 on the track bed 20

Fig. 8

Fig. 9

S4-1' — select the length and width of the vibration damping pad layer 12 within a preset range, and calculate the total stiffness per linear meter of the track bed resonator 10 when using vibration damping pad layers 12 of different types

S4-2' — according to the total stiffness, calculate the natural frequency of the track bed resonator 10

S4-3' — determine whether the natural frequency of the track bed resonator 10 is equal to the indoor vibration resonance natural frequency, if determined yes, select the size and static moduli of the vibration damping pad layer 12 corresponding to the natural frequency; if determined no, continue to replace the vibration damping pad layers 12 with vibration damping pad layers 12 with different size or static moduli and calulate the natural frequency of the corresponding track bed resonator 10, until the natural frequency of the track bed resonator 10 is equal to the indoor vibration resonance natural frequency

Fig. 10

**EP 4 365 560 B1**

**REFERENCES CITED IN THE DESCRIPTION**

**Patent documents cited in the description**

- CN 111664209 A